# EUROPEAN PATENT APPLICATION

(11) **EP 4 642 081 A1**
(43) Date of publication of application: **29.10.2025**
(21) Application number: 24744942.4
(22) Date of filing: 19.01.2024
(51) Int. Cl.: H04W 24/02, H04W 8/18, H04W 88/08, H04W 88/12, H04W 92/12

(54) **ELECTRONIC DEVICE AND METHOD FOR RIC QUERY**

(30) Priority: 20.01.2023 KR 20230009094
(71) Applicant: Samsung Electronics Co., Ltd., Suwon-si, Gyeonggi-do 16677 (KR)
(72) Inventor: SONG, Junhyuk, Suwon-si Gyeonggi-do 16677 (KR); KANG, Seungwon, Suwon-si Gyeonggi-do 16677 (KR); KHO, Youngsung, Suwon-si Gyeonggi-do 16677 (KR); KIM, Chulmin, Suwon-si Gyeonggi-do 16677 (KR); LEE, Chungkeun, Suwon-si Gyeonggi-do 16677 (KR)
(74) Representative: Gulde & Partner
(86) International application number: PCT/KR2024/001004
(87) International publication number: WO 2024/155163

(57) **Abstract**

The present disclosure relates to a 5th generation (5G) or 6th generation (6G) communication system for supporting higher data transmission rates than a 4th generation (4G) communication system, such as long-term evolution (LTE). According to embodiments, a method performed by an E2 node is provided. The method may comprise an operation of receiving a radio access network (RAN) intelligent controller (RIC) query request message from a near-real time (RT) RIC. The method may comprise an operation of receiving an RIC query response message by the near-RT RIC. The RIC query request message may include a RAN function identifier (ID) and an RIC request ID. The RIC query response message may include subscription information corresponding to the RAN function identifier (ID) and the RIC request ID.

## Description

### [Technical Field]

The following descriptions relate to an electronic device and a method for a radio access network (RAN) intelligent controller (RIC) query.

### [Background Art]

An effort is being achieved to develop an improved 5th generation (5G) communication system or a pre-5G communication system to meet an increasing demand for wireless data traffic after commercialization of a 4th generation (4G) communication system. For this reason, the 5G communication system or the pre-5G communication system is called a communication system beyond 4G Network or a system Post Long Term Evolution (LTE) system.

In order to achieve a high data transmission rate, the 5G communication system is being considered for implementation in an ultra-high frequency (mmWave) band (e.g., such as a 60GHz band). To mitigate path loss of a radio wave and increase a transmission distance of the radio wave in the ultra-high frequency band, beamforming, massive MIMO, Full Dimensional MIMO (FD-MIMO), array antenna, analog beam-forming, and large-scale antenna technologies are being discussed in the 5G communication system.

In addition, in order to improve a network of a system, technologies such as an evolved small cell, an advanced small cell, a cloud radio access network (cloud RAN), an ultra-dense network, device to device communication (D2D), wireless backhaul, a moving network, cooperative communication, Coordinated Multi-Points (CoMP), an interference cancellation, and the like in the 5G communication system.

Additionally, Hybrid Frequency Shift Keying and Quadrature Amplitude Modulation (FQAM) and Sliding Window Superposition Coding (SWSC), which are an Advanced Coding Modulation (ACM) method, Filter Bank Multi Carrier (FBMC), Non Orthogonal Multiple Access (NOMA), and Sparse Code Multiple Access (SCMA), which are an advanced access technology, and the like are being developed in the 5G system.

As the 5G system and a new radio (or a next radio) (NR) are commercialized to meet the demand for the wireless data traffic, a service with a high data transmission rate is being provided to a user through the 5G system such as 4G, and also a wireless communication service having various purposes such as Internet of Things, a service that requires high reliability for a specific purpose, and the like is expected to be provided. In a system that is currently mixed with a 4th generation communication system, 5th generation system, and the like, an open radio access network (O-RAN), which was established by operators and equipment providers being gathered together, defines an E2 application protocol standard, an application protocol of an E2 interface between an E2 node and a Near-real-time (RT) radio access network (RAN) intelligent controller (RIC).

Looking back at a development process throughout a generation of wireless communication, a technology has been developed primarily for a human-targeted service such as voice, multimedia, data and the like. Connected devices, which are experiencing an explosive increase after commercialization of the 5th Generation (5G) communication system, are expected to be connected to a communication network. An example of an object connected to the network may include a vehicle, a robot, a drone, a home appliance, a display, a smart sensor installed in various infrastructures, construction machinery, factory equipment, and the like. A mobile device is expected to evolve into various form factors such as augmented reality glasses, a virtual reality headset, a hologram device and the like. An effort is being achieved to develop an improved 6G communication system to provide various services by connecting hundreds of billions of devices and objects in a 6th Generation (6G) era. For this reason, a 6G communication system is called a system beyond 5G communication.

In the 6G communication system, which is expected to be realized around 2030, maximum transmission speed is tera (i.e., 1,000 giga) bits per second (bps) and wireless delay time is 100 microseconds (µsec). That is, transmission speed in the 6G communication system is 50 times faster than the 5G communication system, and the wireless delay time is reduced to onetenth.

To achieve this high data transmission speed and ultra low latency, the 6G communication system is being considered for implementation in a terahertz (THz) band (e.g., such as a band from 95 gigahertz (GHz) to 3 terahertz (THz)). The terahertz band is expected to be more important in a technology to ensure signal reachability, wich is coverage, due to more severe path loss and atmospheric absorption compared to a millimeter wave (mmWave) band introduced in 5G. As a key technology to ensure coverage, new waveform beamforming and a multiple antenna transmission technology such as, massive Multiple-Input and Multiple-Output (MIMO), Full Dimensional MIMO (FD-MIMO), an array antenna, and a large scale antenna, and the like, which are superior in terms of coverage than Orthogonal Frequency Division Multiplexing (OFDM), an antenna, and a Radio Frequency element, should be developed. Additionally, new technologies such as metamaterial-based lens and antenna, high-dimensional spatial multiplexing technology using Orbital Angular Momentum (OAM), Reconfigurable Intelligent Surface (RIS), and the like are being discussed to improve coverage of a terahertz band signal.

In addition, in order to enhance frequency efficiency and improve a system network, in the 6G communication system, a full duplex technology in which an uplink and a downlink simultaneously utilize the same frequency resource at the same time, a network technology that comprehensively utilizes a satellite, High-Altitude Platform Stations (HAPS), and the like, a network structure innovation technology that supports a mobile base station and enables network operation optimization and automation, a dynamic spectrum sharing technology through collision avoidance based on spectrum usage prediction, an AI-based communication technology that utilizes Artificial Intelligence (AI) from a design stage and internalizes end-to-end AI support functions to realize system optimization, a next-generation distributed computing technology that realizes services with complexities that exceed a limit of terminal computing capability by utilizing ultra-high-performance communication and computing resources (Mobile Edge Computing (MEC), a cloud, and the like), and the like are being developed. Additionally, an attempt to further strengthen connectivity between devices, further optimize a network, promote softwareization of a network entity, and increase openness of wireless communication is continuing through design of a new protocol to be used in the 6G communication system, implementation of a hardwarebased security environment, development of a mechanism for utilization use of data, and development of a technology for maintaining privacy.

Due to this research and development of the 6G communication system, it is expected that the next hyper-connected experience of a new level will be possible through hyperconnectivity of the 6G communication system that includes not only a connection between objects but also a connection between a person and an object. Specifically, it is expected that a service such as truly immersive eXtended Reality (XR), a high-fidelity mobile hologram, a digital replica and the like will be provided through the 6G communication system. In addition, a service such as remote surgery, industrial automation, and emergency response through enhanced security and reliability will be provided through the 6G communication system, so it will be applied in various fields such as industry, medicine, an automobile, and a home appliance.

In the 6G communication system, a function of a RAN is expected to be further subdivided into a type of a service subscriber and a service provider. In a service-based network, a subscription service acknowledgment procedure for a service subscription status will be applied to various functions.

### [Disclosure]

### [Technical Solution]

In embodiments, a method performed by an E2 node is provided. The method may comprise receiving a radio access network (RAN) intelligent controller (RIC) query request message from a Near-real time (RT) RIC. The method may comprise receiving a RIC query response message from the Near-RT RIC. The RIC query request message may include a RAN function identifier (ID) and a RIC request ID. The RIC query response message may include subscription information corresponding to the RAN function identifier (ID) and the RIC request ID.

In embodiments, a method performed by a Near-real time (RT) radio access network (RAN) intelligent controller (RIC) is provided. The method may comprise transmitting a RIC query request message to an E2 node. The method may comprise receiving a RIC query response message from the E2 node. The RIC query request message may include a RAN function identifier (ID) and a RIC request ID. The RIC query response message may include subscription information corresponding to the RAN function identifier (ID) and the RIC request ID.

In embodiments, an electronic device of an E2 node is provided. The electronic device may comprise at least one transceiver, and at least one processor coupled with the at least one transceiver. The at least one processor may be configured to receive a radio access network (RAN) intelligent controller (RIC) query request message from a Near-real time (RT) RIC. The at least one processor may be configured to receive a RIC query response message from the Near-RT RIC. The RIC query request message may include a RAN function identifier (ID) and a RIC request ID. The RIC query response message may include subscription information corresponding to the RAN function identifier (ID) and the RIC request ID.

In embodiments, a device of a Near-real time (RT) radio access network (RAN) intelligent controller (RIC) may comprise at least one transceiver, and at least one processor coupled with the memory, and the at least one transceiver. The at least one processor may be configured to transmit a RIC query request message to an E2 node. The at least one processor may be configured to receive a RIC query response message from the E2 node. The RIC query request message may include a RAN function identifier (ID) and a RIC request ID. The RIC query response message may include subscription information corresponding to the RAN function identifier (ID) and the RIC request ID.

In embodiments, an electronic device of an E2 node is provided. The electronic device may comprise memory storing instructions, at least one transceiver, and at least one processor. The instructions, when executed by the at least one processor, may cause the electronic device to receive a radio access network (RAN) intelligent controller (RIC) query request message from a Near-real time (RT) RIC, and receive a RIC query response message from the Near-RT RIC. The RIC query request message may include a RAN function identifier (ID) and a RIC request ID. The RIC query response message may include subscription information corresponding to the RAN function identifier (ID) and the RIC request ID.

In embodiments, a device of a Near-real time (RT) radio access network (RAN) intelligent controller (RIC) may comprise memory storing instructions, at least one transceiver, and at least one processor coupled with the at least one transceiver. The instructions, when executed by the at least one processor, may cause the electronic device to transmit a RIC query request message to an E2 node, and receive a RIC query response message from the E2 node. The RIC query request message may include a RAN function identifier (ID) and a RIC request ID. The RIC query response message may include subscription information corresponding to the RAN function identifier (ID) and the RIC request ID.

In embodiments, a non-transitory computer-readable storage medium is provided. The non-transitory computer-readable storage medium may store instructions that cause an E2 node to perform operations including receiving a radio access network (RAN) intelligent controller (RIC) query request message from a Near-real time (RT) RIC, and receiving a RIC query response message from the Near-RT RIC. The RIC query request message may include a RAN function identifier (ID) and a RIC request ID. The RIC query response message may include subscription information corresponding to the RAN function identifier (ID) and the RIC request ID.

In embodiments, a non-transitory computer-readable storage medium is provided. The non-transitory computer-readable storage medium may store instructions that cause an E2 node to perform operations including transmitting a RIC query request message to the E2 node, and receiving a RIC query response message from the E2 node. The RIC query request message may include a RAN function identifier (ID) and a RIC request ID. The RIC query response message may include subscription information corresponding to the RAN function identifier (ID) and the RIC request ID.

### [Description of the Drawings]

FIG. 1 illustrates an example of a 4th generation (4G) Long Term Evolution (LTE) core system.
FIG. 2A illustrates an example of a 5th generation (5G) non-standard alone (NSA) system.
FIG. 2B illustrates an example of an architecture for open radio access network (O-RAN).
FIG. 3 illustrates a protocol stack of an E2 application protocol message in a radio access network according to one or more embodiments.
FIG. 4 illustrates an example of a connection between a base station and a radio access network (RAN) intelligence controller (RIC) in a radio access network according to one or more embodiments.
FIG. 5 illustrates a configuration of an apparatus in a radio access network according to one or more embodiments;
FIG. 6 illustrates logical functions related to an E2 message of an RIC and an E2 node in a radio access network according to one or more embodiments.
FIG. 7 illustrates examples of functional separation between an E2 node and an RIC according to one or more embodiments.
FIG. 8 illustrates an example of implementation of an E2 node and an RIC according to one or more embodiments;
FIG. 9 illustrates examples of functional separation between a centralized unit (CU) and an RIC according to one or more embodiments.
FIG. 10 illustrates a functional block of each of a Near-RT RIC and an E2 node according to a subscription procedure according to embodiments.
FIG. 11 illustrates a RIC query procedure according to embodiments.
FIG. 12 illustrates an example of error resolution of a RIC subscription procedure through a RIC query procedure according to embodiments.

### [Mode for Invention]

The terms used in the disclosure are merely used to better describe a certain embodiment and are not intended to limit the scope of other embodiments thereto. A singular expression may include a plural expression unless the context clearly dictates otherwise. The terms used herein, including technical and scientific terms, may have the same meanings as those commonly understood by those skilled in the art to which the disclosure pertains. Terms defined in a general dictionary amongst the terms used in the disclosure may be interpreted as having the same or similar meaning as those in the context of the related art, and they are not to be construed in an ideal or overly formal sense, unless explicitly defined in the disclosure. In some cases, even the terms defined in the disclosure shall not be interpreted to exclude embodiments of the disclosure.

In various examples of the disclosure described below, a hardware approach will be described as an example. However, since one or more embodiments of the disclosure include a technology that utilizes both the hardware and the software, they are not intended to exclude the software-based approach.

As used in the following description, the terms referring to a configuration (e.g., setup, setting, arrangement, control), the terms referring to a signal (e.g., packet, message, signal, information, signaling), the terms referring to a resource (e.g., section, symbol, slot, subframe, radio frame, subcarrier, resource element (RE), resource block (RB), bandwidth part (BWP), occasion), the terms for indicating an operating state (e.g., step, operation, procedure), the terms referring to data (e.g., packet, message, user stream, information, bit, symbol, codeword), the terms referring to a channel, the terms referring to network entities (distributed unit (DU), radio unit (RU), central unit (CU), control plane (CU-CP), O-DU (O-RAN(open radio access network) DU), O-RU (O-RAN RU), O-CU (O-RAN CU), O-CU-UP (O-RAN CU-CP), O-CU-CP (O-RAN CU-CP)), the terms referring to components of an apparatus, and so on are illustrated for convenience of description. Therefore, the disclosure is not limited to those terms described below, and other terms having equivalent technical meanings thereto may be used therefor. In addition, as used herein, the terms such as e.g., '... unit', '... module', '... group', '... part' may mean at least one form of structure or a unit that processes a certain function.

Further, throughout the disclosure, an expression such as e.g., 'above (or exceeding)' or 'below' may be used to determine whether a specific condition is satisfied or fulfilled, but it is merely of a description for expressing an example and is not intended to exclude the meaning of 'more than or equal to' or 'less than or equal to'. A condition described as 'more than or equal to' may be replaced with 'above', a condition described as 'less than or equal to' may be replaced with 'below', and a condition described as 'more than or equal to' and 'below' may be replaced with 'above' and 'less than or equal to', respectively. Further, unless explicitly dictated otherwise, 'A' to 'B' is intended to mean at least one of the elements from A to (inclusive of A) and B (inclusive of B). Hereinafter, unless explicitly dictated otherwise, 'C' and/or 'D' is intended to mean at least one of 'C' or 'D', that is, {'C', 'D', 'C' and 'D'}.

Further, the disclosure describes one or more embodiments using the terms used in some communication standard specifications (e.g., 3rd Generation Partnership Project (3GPP), extensible radio access network (xRAN), open-radio access network (O-RAN), but they are merely of an example for description. One or more embodiments of the disclosure may be easily modified and applied even in other communication systems.

Along with the commercialization of 4G communication system and 5G communication systems (e.g., New Radio (NR)), differentiated service supports have been ever required for users in a virtualized network. Thus, the 3GPP has been originated from a joint research project between several mobile communication-related organizations, aiming to create a 3G mobile communication system specification, globally applicable, within the scope of IMT-2000 project of the International Telecommunication Union (ITU). The 3GPP was established in December 1998, and the 3GPP specification is based on the advanced GSM standard, including all of radio, core network, and service architecture in the standardization range. Accordingly, the O-RAN has newly defined RU (radio unit), DU (digital unit), CU (central unit) - CP (control plane), and CU-UP (user plane), which are nodes constituting a 3GPP network entity (NE) and a base station, as O(O-RAN)-RU, O-DU, O-CU-CP, and O-CU-UP, respectively, and additionally standardized the near-real-time (near-RT) radio access network intelligent controller (RIC). According to one or more embodiments, the disclosure is directed to an operator specific service model in an E2 interface in which an RIC requests a service from O-DU, O-CU-CP or O-CU-UP. Here, O-RU, O-DU, O-CU-CP, and O-CU-UP may be understood as objects constituting a RAN capable of operating according to an O-RAN standard, and may be referred to as 'E2 nodes.' An interface with the objects constituting the RAN capable of operating according to the O-RAN standard between the RIC and the E2 nodes uses an E2AP, which is an application protocol.

The RIC is a logical node that may collect information on a cell site where a terminal, an O-DU, an O-CU-CP, or an O-CU-UP transmits and receives. The RIC may be implemented in the form of servers concentrated in one physical location. Connections may be established between O-DU and RIC, between O-CU-CP and RIC, and between O-CU-UP and RIC through Ethernet. To this end, the interface standard specification for communication between O-DU and RIC, between O-CU-CP and RIC, and between O-CU-UP and RIC are required, and the definitions of the message specification for E2-DU, E2-CU-CP, E2-CU-UP or the like and the procedures between O-DU, O-CU-CP, O-CU-UP and RIC are required as well. In particular, it is necessary to define the functions of E2-DU, E2-CU-CP, and E2-CU-UP messages for supporting services for a wide range of cell coverage, as the differentiated service support is required for users in a virtualized network and the call processing messages/functions generated in the O-RAN are concentrated on the RIC. In am embodiment, the RIC may be referred as a network controller or a RAN controller, etc.

The RIC may perform communications with O-DU, O-CU-CP, and O-CU-UP using the E2 interface, and generate and transmit a subscription message to set event occurrence conditions. More specifically, the RIC may generate an E2 subscription request message and transfer the same to an E2 node (e.g., O-CU-CP, O-CU-UP, O-DU) to set a call processing EVENT. Further, subsequent to setting the call processing EVENT, the E2 node may transmit a subscription request response message transferred to the RIC. The E2 node may transmit the current status to the RIC through an E2 indication/report. The RIC may use an E2 control message to control O-DU, O-CU-CP, and O-CU-UP. One or more embodiments of the disclosure propose an E2 indication message that transmits a UE unit of measurement information for each period set in a subscription event condition in the O-DU. Furthermore, one or more embodiments of the disclosure propose a message for controlling a resource transmitted from the RIC to the O-DU.

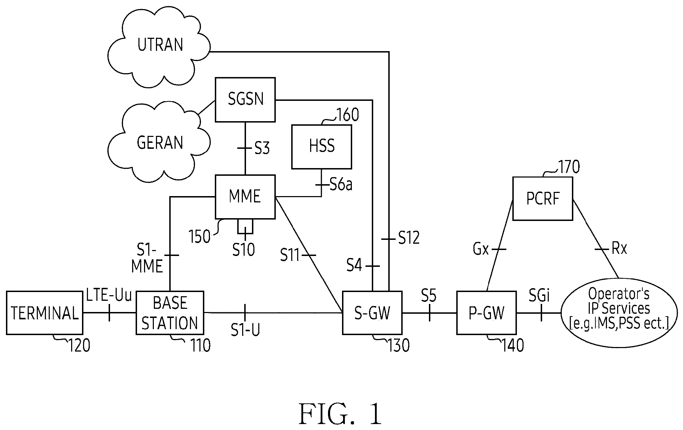

FIG. 1 illustrates an example of a 4G (fourth generation) LTE (Long Term Evolution) core system.

Referring to FIG. 1, the LTE core system includes a base station 110, a terminal 120, a serving gateway (S-GW) 130, a packet data network gateway (P-GW) 140, a mobility management entity (MME) 150, a home subscriber server (HSS) 160, and a policy and charging rule function (PCRF) 170.

The base station 110 is a network infrastructure that provides wireless access to the terminal 120. For example, the base station 110 is an apparatus that collects state information of the terminal 120, such as a buffer state, an available transmission power, or a channel state, to perform scheduling. The base station 110 has a coverage defined as a certain geographic area based on a distance capable of transmitting a signal. The base station 110 is connected to the MME 150 through an S1-MME interface. In addition, the base station 110 may be also referred to as 'access point (AP)', 'eNodeB (eNB)', 'wireless point', 'transmission/reception point (TRP)', or other terms having an equivalent technical meaning thereto.

The terminal 120, which is a device used by a user, performs communications with the base station 110 through a radio channel. In some cases, the terminal 120 may be operated without any user involvement. For example, the terminal 120 may be a device to perform machine-type communication (MTC), and may not be carried by a user. Further, the terminal 120 may be referred to as 'user equipment (UE)', 'mobile station', 'subscriber station', 'customer-premises equipment (CPE)', 'remote terminal', 'wireless terminal', 'user device', or any other term having an equivalent meaning thereto.

The S-GW 130 provides a data bearer, and generates or controls the data bearer under the control of the MME 150. For example, the S-GW 130 may process packets arriving from the base station 110 or packets to be forwarded to the base station 110. Further, the S-GW 130 may serve as an anchor during handover of the terminal 120 between base stations. The P-GW 140 may serve as a connection point with an external network (e.g., an Internet network). Further, the P-GW 140 may allocate an Internet Protocol (IP) address to the terminal 120 and serves as an anchor for the S-GW 130. Further, the P-GW 140 may apply a quality of service (QoS) policy of the terminal 120 and manage account data.

The MME 150 manages mobility of the terminal 120. Further, the MME 150 may perform authentication, bearer management, and so on for the terminal 120. That is to say, the MME 150 is in charge of mobility management and various control functions for the terminal. The MME 150 may be associated with a serving GPRS support node (SGSN).

The HSS 160 stores key information and subscriber profile for authentication of the terminal 120. The key information and the subscriber profile are transmitted from the HSS 160 to the MME 150 when the terminal 120 makes access to a network.

The PCRF 170 defines rules for the policy and the charging. The stored information is transmitted from the PCRF 170 to the P-GW 140, and the P-GW 140 may perform control (e.g., QoS management, charging, etc.) of the terminal 120 based on the information provided from the PCRF 170.

Carrier aggregation (hereinafter, referred to as 'CA') may be capable of combining multiple component carriers and transmitting/receiving signals using such multiple component carriers at the same time, thereby increasing the efficiency of frequency use from the viewpoint of a terminal or a base station. Specifically, according to the CA technology, the terminal and the base station may transmit and receive signals using a broadband, using multiple component carriers in uplink (UL) and downlink (DL), respectively. Each of the component carriers is located in a different frequency band. Hereinafter, the term 'uplink' refers to a communication link the terminal transmits a signal to the base station, and the term 'downlink' refers to a communication link the base station transmits a signal to the terminal. In such a circumstance, the number of uplink component carriers and downlink component carriers may be different from each other.

Dual connectivity or multi-connectivity may increase the efficiency of frequency use from the viewpoint of a terminal or base station, by having one terminal connected to multiple base stations to transmit and receive signals simultaneously using carriers in the multiple base stations located in different frequency bands. The terminal may be connected to a first base station (e.g., a base station providing services using LTE technology or 4G mobile communication technology) and a second base station (e.g., a base station providing services using NR technology or 5G mobile communication technology) at the same, to transmit and receive traffic. In such a case, the frequency resources used by each base station may be located in different bands. As such, a scheme that operates based on a dual connectivity with LTE and NR may be referred to as 5G non-standalone (NSA).

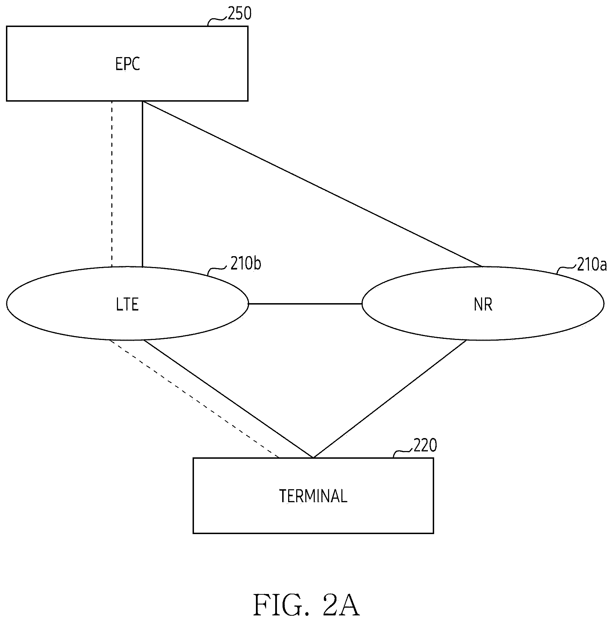

FIG. 2A illustrates an example of a 5G NSA system.

Referring to FIG. 2A, the 5G NSA system includes an NR RAN 210a, an LTE RAN 210b, a terminal 220, and an evaded packet core (EPC) 250. The NR RAN 210a and the LTE RAN 210b are connected to the EPC 250, and the terminal 220 may receive a service from either one or both of the NR RAN 210a and the LTE RAN 210b at the same time. The NR RAN 210a includes at least one NR base station, and the LTE RAN 210b includes at least one LTE base station. Here, the NR base station may be referred to as '5th generation (5G) node,' 'next generation nodeB (gNB),' or other terms having an equivalent technical meaning. Further, the NR base station may have a structure separated by a central unit (CU) and a digital unit (DU), and the CU may also have a structure separated by a control plane (CU-CP) unit and a user plane (CU-UP) unit.

In the structure shown in FIG. 2A, the terminal 220 may perform a radio resource control (RRC) connection through a first base station (e.g., a base station belonging to LTE RAN 210b) and may be served with a function (e.g., connection management, mobility management, etc.) provided in the control plane. Further, the terminal 220 may be provided with an additional radio resource for transmitting and receiving data through a second base station (e.g., a base station belonging to NR RAN 210a). Such dual connectivity technology using the LTE and the NR may be referred to as EN-DC (evolved universal terrestrial radio access (E-UTRA) - NR dual connectivity). imilarly, the dual connectivity technology that the first base station uses the NR technology and the second base station uses the LTE technology may be referred to as NR-DC (NR - E-UTRA dual connectivity). Further, one or more embodiments may be applied to various other forms of multi-connectivity and carrier aggregation technologies. Furthermore, one or more embodiments may be also applied in a case where a first system (using a first communication technology) and a second system (using a second communication technology) are implemented in one device, or in a case where a first base station and a second base station are located in the same geographical location.

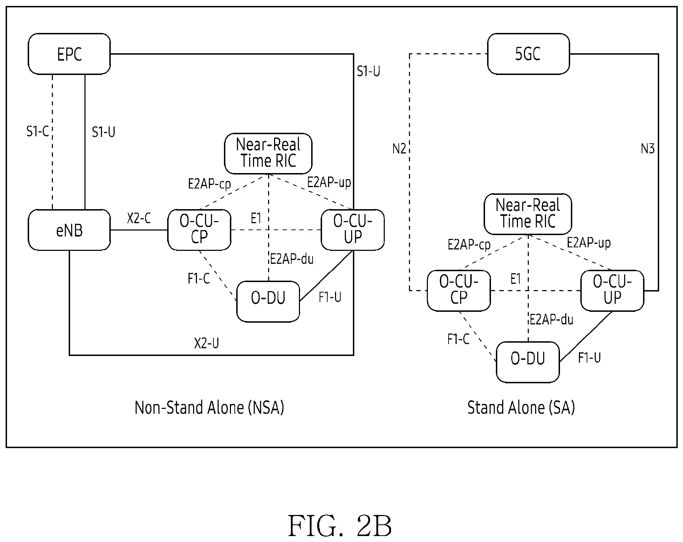

FIG. 2B illustrates an example of an architecture for O-RAN. For the purpose of E2-SM-KPIMON (key performance indicator (KPI) monitoring) of an E2 service model, an O-RAN NSA mode in multi-connectivity operation using E-UTRA and NR radio access technology may be considered, while the E2 node may be assumed to be in O-RAN standalone (SA) mode.

Referring to FIG. 2B, in deployment of the O-RAN NSA mode, the eNB may be connected to the EPC via an S1-C/S1-U interface, and may be connected to the O-CU-CP via an X2 interface. The O-CU-CP for deployment of the O-RAN SA mode may be connected to the 5GC (5G core) via an N2/N3 interface.

Currently, discussions are underway to improve and enhance performance of the initial 5G mobile communication technology in consideration of the services that the 5G mobile communication technology was intended to support and physical layer standardization for technologies such as Vehicle-to-Everything (V2X) to help determine the driving of an autonomous vehicle based on its own location and status information transmitted by the vehicle and increase user convenience, New Radio Unlicensed (NR-U), which aims to operate a system that meets various regulatory requirements in unlicensed bands, NR terminal low power consumption technology (UE Power Saving), Non-Terrestrial Network (NTN), which is direct terminal-satellite communication to secure coverage in areas where communication with the terrestrial network is impossible, and positioning are in progress.

In addition, standardization in the field of air interface architecture/protocol for Technologies such as intelligent factories (Industrial Internet of Things, IIoT) for new service support through linkage and convergence with other industries, Integrated Access and Backhaul (IAB), which provides nodes for network service area expansion by integrating and supporting wireless backhaul links and access links, mobility enhancement including conditional handover and dual active protocol stack (DAPS) handover, and 2-step random access (2-step RACH for NR) that simplifies the random access procedure is also in progress and standardization in the field of system architecture/service like 5G baseline architecture (e.g., Service based Architecture, Service based Interface) for grafting of Network Functions Virtualization (NFV) and Software-Defined Networking (SDN) technologies, based on the location of the device about Mobile Edge Computing (MEC), etc. is also in progress.

If such a 5G mobile communication system is commercialized, the explosively increasing trend of connected devices will be connected to the communication network and accordingly, it is expected that the function and performance enhancement of the 5G mobile communication system and the integrated operations of connected devices will be required. To this end, augmented reality (AR), virtual reality (VR), mixed reality (MR), etc. to efficiently support eXtended Reality (XR) and artificial intelligence (AI) and machine learning (ML), new research on 5G performance improvement and complexity reduction, AI service support, metaverse service support, and drone communication will be conducted. To this end, new studies regarding eXtended Reality (XR) to efficiently support augmented reality (AR), virtual reality (VR), mixed reality (MR), etc. to efficiently support and 5G performance improvement and complexity reduction utilizing artificial intelligence (AI) and machine learning (ML), AI service support, metaverse service support, drone communication, etc. are forthcoming.

In addition, the development of these 5G mobile communication systems could be the basis for development of not only multi-antenna transmission technology like New waveforms to ensure coverage in the terahertz band of 6G mobile communication technology, Full Dimensional MIMO (FD-MIMO), array antenna, large scale antenna, metamaterial-based lenses and antennas to improve coverage of terahertz band signals, high-dimensional spatial multiplexing technology using Orbital Angular Momentum (OAM), Reconfigurable Intelligent Surface (RIS) technology, but also full duplex technology to improve frequency efficiency and system network of 6G mobile communication technology, artificial Intelligence (AI) -based communication technology that realizes system optimization by utilizing satellite and AI from the design stage and internalizing end-to-end AI support functions, next-generation distributed computing technology that realizes complex services that exceed the limits of terminal computing capabilities by utilizing ultra-high-performance communication and computing resources, etc.

Although illustrated in FIGS. 1 to 2B as an example in a 4G and/or 5G environment, this description does not limit the scope of the communication environment of the embodiments of the present disclosure. Technical principles according to embodiments of the present disclosure may also be applied to 6G and post-6G communication technologies and network environments.

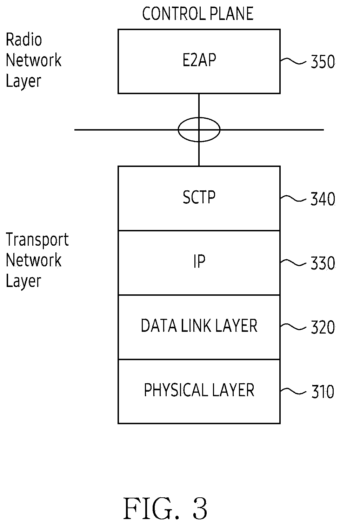

FIG. 3 illustrates an example of a protocol stack of an E2 application protocol message in a radio access network according to one or more embodiments. Referring to FIG. 3, a control plane includes a transport network layer and a radio network layer. The transport network layer includes a physical layer 310, a data link layer 320, an Internet protocol (IP) 330, and a stream control transmission protocol (SCTP) 340.

The radio network layer includes an E2AP 350. The E2AP 350 may be used to deliver a subscription message, an indication message, a control message, a service update message, and a service query message, and may be transmitted from a higher layer of the SCTP 340 and the IP 330.

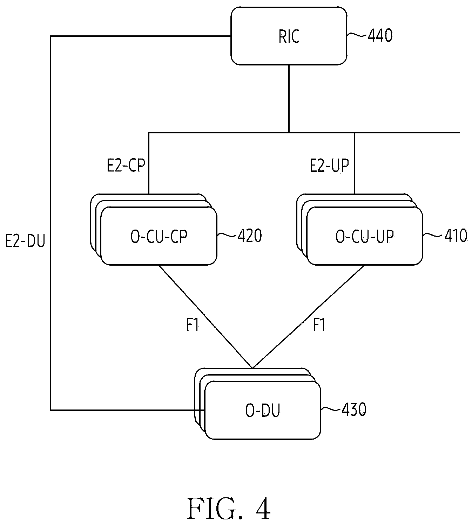

FIG. 4 illustrates an example of connection between a base station and a RIC in a radio access network according to one or more embodiments of the disclosure.

Referring to FIG. 4, the RIC 440 is connected to the O-CU-UP 410, the O-CU-CP 420, and the O-DU 430. The RIC 440 may customize the RAN functionality for new services or regional resource optimization. The RIC 440 may provide network intelligence (e.g., policy enforcement, handover optimization), resource assurance (e.g., radio-link management, advanced self-organized network (SON), resource control (e.g., load balancing, slicing policy) or the like. The RIC 440 may communicate with the O-CU-CP 420, the O-CU-UP 410, and the O-DU 430. The RIC 440 may be connected to each node through E2-CP, E2-UP, and E2-DU interfaces. Further, the interface between the O-CU-CP and the DU, and/or between the O-CU-UP and the DU may be referred to as an F1 interface. In the following description, DU and O-DU, CU-CP and O-CU-CP, and CU-UP and O-CU-UP may be respectively used interchangeably with each other.

Although FIG. 4 illustrates one RIC 440, a plurality of RICs may exist according to one or more embodiments. The plurality of RICs may be implemented with a plurality of hardware located in the same physical location or may be implemented by means of virtualization using one hardware.

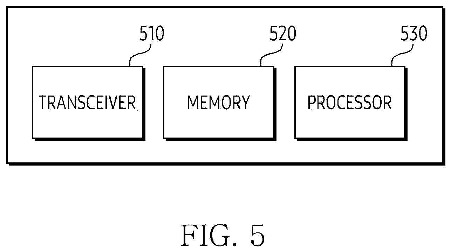

FIG. 5 illustrates an example of a configuration of an apparatus according to embodiments of the disclosure. The configuration illustrated in FIG. 5 may be understood as a configuration of a device having at least one function of near-RT RIC, non-RT RIC, O-CU-CP, O-CU-UP, and O-DU of FIG. 4. As used hereunder, the terms such as '~ module', '~ unit', '~ group', '~ part', or the like may refer to a unit that process at least one function or operation, which may be implemented as hardware, software, or a combination of hardware and software.

Referring to FIG. 5, a core network device includes a communication unit 510, a storage unit 520, and a controller 530.

The communication unit 510 provides an interface for performing communication with other devices in a network. In other words, the communication unit 510 converts a bit string transmitted from the core network device to another device into a physical signal and converts the physical signal received from the other device into a bit string. That is, the communication unit 510 may transmit and receive signals. Accordingly, the communication unit 510 may be referred to as a modem, a transmit unit, a receive unit, or a transmit/receive unit. In this case, the communication unit 510 enables the core network device to communicate with other devices or systems through a backhaul connection (e.g., wired backhaul or wireless backhaul) or through the network. The communication unit 510 may include one or more transceivers.

The storage unit 520 stores data such as e.g., a basic program, an application program, and setting information for an overall operation of the core network device. The storage 520 may include a volatile memory, a non-volatile memory, or a combination of the volatile memory and the non-volatile memory. Further, the storage unit 520 provides the stored data according to a request of the controller 530.

The controller 530 controls overall operations of the core network device. For example, the controller 530 transmits and receives signals through the communication unit 510. Further, the controller 530 records and reads data in/from the storage unit 520. To this end, the controller 530 may include at least one processor. According to one or more embodiments, the controller 530 may control the apparatus to perform operations according to one or more embodiments described in the disclosure.

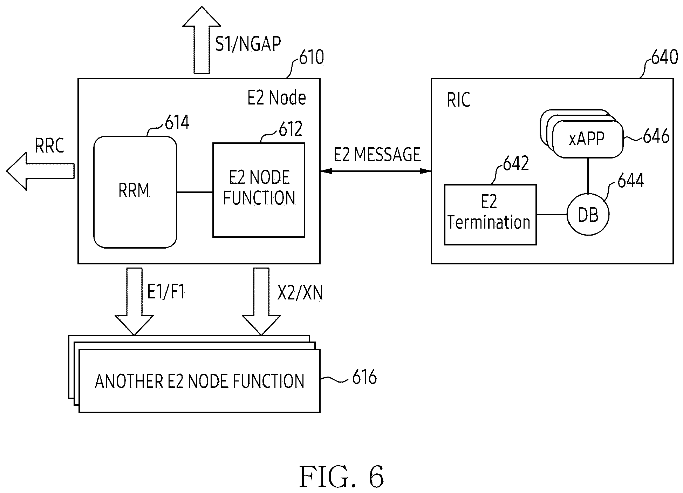

FIG. 6 illustrates a logical function related to an E2 message of an E2 node and an RIC in a radio access network according to embodiments of the disclosure.

Referring to FIG. 6, an RIC 640 and an E2 node 610 may transmit or receive E2 messages to/from each other. For example, the E2 node 610 may be an O-CU-CP, an O-CU-UP, an O-DU, or a base station. The communication interface of the E2 node may be determined depending upon the type of the E2 node 610. For example, the E2 node 610 may communicate with another E2 node 616 through an E1 interface or an F1 interface. Alternatively, for example, the E2 node 610 may communicate with the E2 node 616 via an X2 interface or an XN interface. Alternatively, for example, the E2 node 610 may perform communication through an S1 interface or a next generation application protocol (NGAP) interface (i.e., an interface between a next generation (NG) RAN node and an AMF).

The E2 node 610 may include an E2 node function 612. The E2 node function 612 corresponds to a specific xApp (application S/W) 646 installed in the RIC 640. For example, in case of a KPI monitor, KPI monitor collection S/W may be installed in the RIC 640, and the E2 node 610 may include the E2 node function 612 that generates KPI parameters and then delivers an E2 message including the KPI parameters to an E2 termination 642 located in the RIC 640. The E2 node 610 may include a radio resource management (RRM) 614. The E2 node 610 may manage resources provided to a radio network for a terminal. xApp 646 is an application designed to run on the Near-RT RIC. The application may consists of one or more microservices and at the point of on-boarding will identify which data it consumes and which data it provides. The application is independent of the Near-RT RIC and may be provided by any third party. The E2 interface enables a direct association between the xApp 646 and the RAN functionality.

The E2 termination 642 (located in the RIC 640) is a termination of the RIC 640 for the E2 message, and performs a function of interpreting the E2 message delivered (or transmitted) by the E2 node 610, and then, delivering the E2 message to the xApp 646. A database 644 (located in the RIC 640) may be used for the E2 termination 642 and the xApp 646. The E2 node 610 (shown in FIG. 6) is a terminal of at least one interface, and may be understood as a termination of messages transmitted to a terminal, a neighboring base station, and a core network.

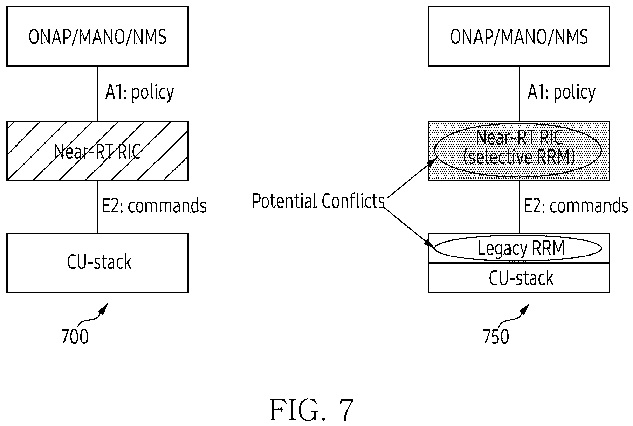

FIG. 7 illustrates examples of functional separations between an E2 node and an RIC according to one or more embodiments of the disclosure. The O-RAN specification provides functional separations between the E2 node and the RIC. For example, the E2 node may be a CU, and the RIC may be a near-RT RIC. The RIC may be connected to open network automation platform (ONAP) / management and orchestration (MANO) / network management system (NMS) through an A1 interface. The RIC may be connected to the E2 node through an E2 interface. The E2 interface may deliver commands. Functional separation options may include functional separation 700 that manages the entire radio resource management (RRM) in the near-RT RIC, and functional separation 750 that optionally manages the RRM in the near-RT RIC.

In related art, the near-RT RIC may support E2 with an open logical interface aimed at multiple vendor environments, regardless of the implementation of specific RRC-RRM algorithms or operations located in near-RT RIC. In one embodiment, E2SM-RIC (E2 Service Model Radio Interface Control) may be paired with E2SM-NI capable of performing injection/modification/configuration of a Per UE RRC message for each I/F and network entity. In other words, the near-RT RIC can be gradually improved from the function separation 750 toward the function separation 700. E2 interface may evolve into an open logical interface that may be independent of the implementation of a certain RRC-RRM algorithm or operation in the near-RT RIC and may aim at multi-vendor environments.

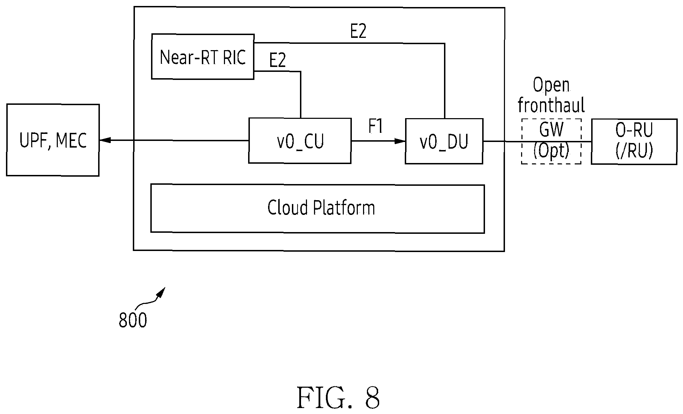

FIG. 8 illustrates an example of implementation of an E2 node and an RIC according to one or more embodiments of the disclosure. In an example 800, the E2 node (e.g., O-DU, O-CU) and the RIC may be virtualized on a cloud platform (e.g., open chassis and bladespecification edge clouds) and configured in a device (e.g., a server). Such a scenario can support deployment in dense urban areas with abundant fronthaul capacity enabling baseband unit (BBU) functions pooled at a central location, with low latency enough to meet the O-DU latency requirements. In one embodiment, it may not be necessary to attempt to centralize the RIC close to RT beyond the limit capable of centralizing the O-DU functionality. According to an embodiment, E2SM-RIC may be optimized for an O-RAN deployment scenario in which near-RT RIC, O-CU, and O-DU are implemented in an O-Cloud

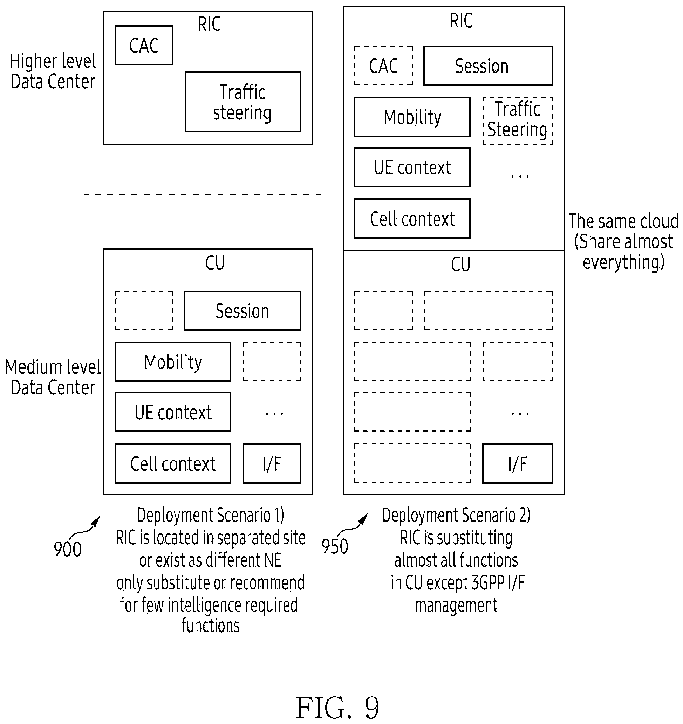

FIG. 9 illustrates examples of functional separations between a centralized unit (CU) and an RIC according to one or more embodiments of the disclosure.

Referring to FIG. 9, the functions for CU and RIC are separated or jointly implemented. According to deployment of the functions, the deployment scenario is determined. For example, the functions are distributed according to the deployment scenario #1 900. RIC is configured to substitute at least intelligence required features (e.g., traffic steering, cell admission control (CAC)) and RIC is located at a separated site or exists only as a different Network Element (NE). In deployment scenario #2 950, RIC can substitute almost all functions of CU except 3GPP I/F management (e.g., mobility function, session function, UE context function, cell context function). In deployment scenario #2 950, the RIC may be implemented as a CU-like device (e.g., a server device). For example, within the same cloud, the RIC may share all functions with the CU.

Although FIG. 9 illustrates two scenarios, other scenarios may be applied. For example, in the deployment scenario #1 (900), the mobility function may be performed by the RIC rather than the CU. Further, for example, in the deployment scenario #1 (900), the UE context function may be performed by the RIC and not the CU. Further, for example, in the deployment scenario #1, the session setting function may be performed by the RIC, and not the CU.

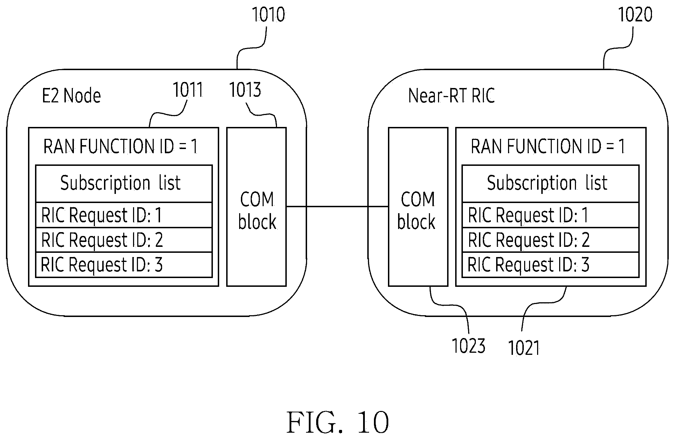

FIG. 10 illustrates a functional block of each of a Near-RT RIC and an E2 node according to a subscription procedure according to embodiments. The subscription procedure means a RIC subscription procedure. In order to establish E2 subscriptions configured with an event trigger and a sequence of actions, the RIC subscription procedure may be used. An O-RAN Working Group (WG) 3 Near-Real-time RAN Intelligent Controller Architecture & E2 General Aspects and Principles (E2GAP) standard defines the Near-RT RIC as a service consumer and the E2 node as a service producer. In order for the Near-RT RIC to receive the service, the RIC subscription procedure may be performed. The standard stipulates that for the RIC subscription procedure, the Near-RT RIC transmits a RIC subscription request message. An E2 node 1010 of FIG. 10 exemplifies the E2 node (e.g., the E2 node 610) described through FIGS. 1 to 9. A Near-RT RIC 1020 of FIG. 10 exemplifies the RIC (e.g., the RIC 640) described through FIGS. 1 to 9.

The Near-RT RIC 1020 may transmit the RIC subscription request message (e.g., a RIC SUBSCRIPTION REQUEST message) to the E2 node 1010. The RIC subscription request message may include information on a RAN function. The E2 node 1010 may transmit a RIC subscription response message (e.g., a RIC SUBSCRIPTION RESPONSE message) to the Near-RT RIC 1020. In a case that there is no error in the RIC subscription request message and the RAN function of the RIC subscription request message may be supported, the E2 node 1010 may transmit the RIC subscription response message to the Near-RT RIC 1020. In a case that the E2 node 1010 does not allow at least one requested action or detects inconsistency in the sequence of actions and/or action definitions or a failure occurs during the RIC subscription procedure, the E2 node 1010 may transmit a RIC subscription failure message (e.g., a RIC SUBSCRIPTION FAILURE message) to the Near-RT RIC 1020.

The subscription request message transmitted from the Near-RT RIC 1020 to the E2 node 1010 may include the RAN function and a RAN Function-related event trigger definition. For example, a structure of the subscription request message is as shown in the following table.

**[Table 1]**

| **IE/Grou p Name** | **Presence** | **Range** | **IE type and re ference** | **Semant ics desc ription** | **Criti cality** | **Assigne d Cri ticality** |
|---|---|---|---|---|---|---|
| Message Type | M | | 9.2.3 | | YES | reject |
| RIC Request ID | M | | 9.2.7 | | YES | reject |
| RAN Function ID | M | | 9.2.8 | | YES | reject |
| RIC Subscription Details | M | | | | YES | reject |
| >RIC Event Trigger Definition | M | | 9.2.9 | | - | |
| >Sequence of Actions | | 1.. <maxofRIC actionID> | | | EACH | ignore |
| >>RIC Action ID | M | | 9.2.10 | | - | |
| >>RIC Action Type | M | | 9.2.11 | | - | |
| >>RIC Action Definition | O | | 9.2.12 | | - | |
| >>RIC Subsequent Action | O | | 9.2.13 | | - | |

For another example, the structure of the subscription request message is as shown in the following table.

**[Table 2]**

| IE/Group Name | Pres ence | Range | IE type and re ference | Seman tics des cription | Criti cality | Assign ed Crit icality |
|---|---|---|---|---|---|---|
| Message Type | M | | 9.2.3 | | YES | reject |
| RIC Request ID | M | | 9.2.7 | | YES | reject |
| RAN Function List | | 1..<maxofRANFuncti onID> | | | | |
| >RAN Function ID | M | | 9.2.8 | | YES | reject |
| >RIC Subscr iption Details | M | | | | YES | reject |
| >>RIC Event Trigger Definition | M | | 9.2.9 | | - | |
| >>Sequence of Actions | | 1. .<maxofRICactionI D> | | | EACH | ignore |
| >>>RIC Action ID | M | | 9.2.10 | | - | |
| >>>RIC Action Type | M | | 9.2.11 | | - | |
| >>>RIC Action Definition | O | | 9.2.12 | | - | |
| >>>RIC Subsequent Action | O | | 9.2.13 | | - | |

For another example, the structure of the subscription request message is shown in the following table.

**[Table 3]**

| IE/Group Name | Pres ence | Range | IE type and re ference | Semantics description | Criti cality | Assigned Criticality |
|---|---|---|---|---|---|---|
| Message Type | M | | 9.2.3 | | YES | reject |
| RIC Request ID | M | | 9.2.7 | | YES | reject |
| RAN Function ID | M | | 9.2.8 | | YES | reject |
| RIC Subscription Details | M | | | | YES | rej ect |
| >RIC Event Trigger Definition List | | 1..<maxnoofRICSt yles> | | | | |
| >>RIC Event Trigger Definition | M | | 9.2.9 | | - | |
| >>Sequence of Actions | | 1.. <maxofRICacti onID> | | | EACH | ignore |
| >>>RIC Action ID | M | | 9.2.10 | | - | |
| >>>RIC Action Type | M | | 9.2.11 | | - | |
| >>>RIC Action Definition | O | | 9.2.12 | | - | |
| >>>RIC Subsequent Action | O | | 9.2.13 | | - | |

For another example, the structure of the subscription request message is as shown in the following table.

**[Table 4]**

| IE/Group Name | Presence | Range | IE type and re ference | Seman tics des cription | Criti cality | Assigned Criticality |
|---|---|---|---|---|---|---|
| Message Type | M | | 9.2.3 | | YES | reject |
| RIC Request ID | M | | 9.2.7 | | YES | reject |
| RAN Function List | | 1.. <maxofRANFu nctionID> | | | | |
| >RAN Function ID | M | | 9.2.8 | | YES | reject |
| >RIC Subscription Details | M | | | | YES | reject |
| >>RIC Event Trigger Definition List | | 1..<maxnoofRIC Styles> | | | | |
| >>>RIC Event Trigger Definition | M | | 9.2.9 | | - | |
| >>>Sequence of Actions | | 1.. <maxofRICaction ID> | | | EACH | ignore |
| >>>>RIC Action ID | M | | 9.2.10 | | - | |
| >>>>RIC Action Type | M | | 9.2.11 | | - | |
| >>>>RIC Action Definition | O | | 9.2.12 | | - | |
| >>>>RIC Subsequent Action | O | | 9.2.13 | | - | |

An E2 setup procedure between the E2 node 1010 and the Near-RT RIC 1020 may be performed. In the E2 setup procedure, the E2 node 1010 may transmit an E2 SETUP REQUEST message to the Near-RT RIC 1020. The Near-RT RIC 1020 may transmit an E2 SETUP RESPONSE message to the E2 node 1010. The E2 setup request message of the E2 setup procedure may include RAN function identifiers (IDs). The E2 setup request message may include a RAN function definition corresponding to the RAN function ID corresponding to each RAN function ID. The RAN function definition may include a description of the RAN function. The RAN function may be specific to an E2 service model. Thereafter, in the procedure, the RAN function may be indicated through the RAN function ID. After the E2 setup procedure, the subscription procedure may be performed to provide a service.

Referring to FIG. 10, the Near-RT RIC 1020 may subscribe to a service provided by the E2 node 1010 by the subscription procedure. The Near-RT RIC 1020 may subscribe to a service corresponding to the RAN function ID. The Near-RT RIC 1020 may store a plurality of subscriptions corresponding to the RAN function ID. Each subscription may correspond to one RIC request ID. The RIC Request ID is a local identifier used by the Near-RT RIC 1020 to identify a specific RIC subscription procedure. For example, as a service producer, the E2 node 1010 may store information on three subscriptions (e.g., RIC Request ID 1, 2, 3) in the RAN function ID (e.g., RAN FUNCTION ID=1) (1011). The E2 node 1010 may perform one or more subscription procedures with a communication block 1023 of the Near-RT RIC 1020 through a communication block 1013. The Near-RT RIC 1020 may obtain the information on the three subscriptions (e.g., RIC Request ID 1, 2, 3) in the RAN function ID (e.g., RAN FUNCTION ID=1) (1013).

A network element (NE) such as the E2 node 1010 or the Near-RT RIC 1020 may be implemented by hardware or in a cloud through software. A software function block corresponding to the E2 node 1010 may operate through the cloud, as illustrated in FIG. 8. The E2 node 1010 may store subscription information in a database (DB). In the same way, a functional block (e.g., a subscription manager of the Near-RT RIC 1020) corresponding to the Near-RT RIC 1020 may operate through the cloud. The Near-RT RIC 1020 may store subscription information in the DB.

Assume a situation in which the function block corresponding to the E2 node 1010 is turned off and then turned on again. The E2 node 1010 may obtain the stored subscription information. If a procedure between the Near-RT RIC 1020 and the E2 node 1010 is in progress while the E2 node 1010 is turned off, a mismatch may occur between the subscription information of the E2 node 1010 and the subscription information of the Near-RT RIC 1020. In the same way, even in the situation in which the function block (e.g., a subscription manager of the Near-RT RIC 1020) corresponding to the Near-RT RIC 1020 is turned off and then turned on again, the mismatch may occur between the subscription information of the E2 node 1010 and the subscription information of the Near-RT RIC 1020. In a case that the mismatch occurs, the E2 node 1010 or the Near-RT RIC 1020 may perform a reset procedure or the E2 setup procedure again. However, after the E2 setup procedure, procedures performed repeatedly RIC subscriptions again may act as an overhead for a resource on an E2 interface.

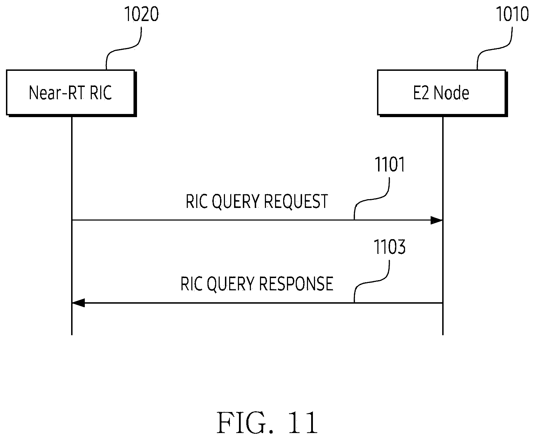

The Near-RT RIC 1020 may initiate a RIC query procedure to audit a state of the E2 node 1010. The RIC query procedure may include transmission of a RIC query request message from the Near-RT RIC 1020 to the E2 node 1010 and transmission of a RIC query response message transmitted from the E2 node 101 to the Near-RT RIC 1020. Audit information for each service model may be included in the RIC query request message. The subscription information mapped to the RIC Request ID and the RAN Function ID may be included in the RIC query response message. The RIC query procedure initiated by the Near-RT RIC 1020 will be described in detail with reference to FIG. 11.

The E2 functions may be grouped into the following categories.
- RIC services: RIC services supported by RIC functional procedures (e.g., the RIC functional procedure (RIC subscription, RIC subscription modification, RIC subscription modification request, RIC subscription deletion, RIC subscription deletion request, RIC display, RIC control, RIC query))
- RIC support functions: interface management procedures (e.g., E2 setup, E2 reset, E2 node configuration update, E2 removal, general error status report), RAN functional service procedures (RIC service update, RIC service query).

FIG. 11 illustrates a RIC query procedure according to embodiments. The RIC query procedure may be initiated by a Near-RT RIC in an E2AP. The RIC query procedure may be performed by the E2 node 1010 and the Near-RT RIC 1020 of FIG. 10.

Referring to FIG. 11, in an operation 1101, the Near-RT RIC 1020 may transmit a RIC QUERY REQUEST message to the E2 node 1010. The Near-RT RIC 1020 may determine necessity of information related to the E2 node 1010. For example, the Near-RT RIC 1020 may determine that subscription information of the E2 node 1010 is required. Based on the necessity, the Near-RT RIC 1020 may transmit the RIC QUERY REQUEST message to the E2 node 1010.

The RIC query request message may include request information that needs to be fetched from the E2 node 1010. The RIC query request message may include a RAN function ID IE. The RIC query request message may include a RIC request ID IE. The Near-RT RIC 1020 may transmit, to the E2 node 1010, the RIC query request message including a unique RIC request ID IE, the RAN function ID IE, a RIC query header IE, and a RIC query definition IE assigned by the Near-RT RIC 1020. The Near-RT RIC 1020 may set a timer T_{RICquery} for waiting for a response from the E2 node 1010. The E2 node 1010 may receive the RIC query request message. The E2 node 1010 may perform validation and attempt to retrieve information requested for Near-RT RIC 1020.

In an operation 1103, the E2 node 1010 may transmit a RIC QUERY RESPONSE message to the Near-RT RIC 1020. If the E2 node 1010 successfully validates and retrieves the information requested for the Near-RT RIC 1020, the E2 node 1010 may transmit the RIC QUERY RESPONSE message including information desired by the Near-RT RIC 1020. The E2 node 1010 may determine a target function, using information of the RAN Function ID IE. The E2 node 1010 may validate the RIC query header IE and the RIC query definition IE. In a case that the requested information is available at the E2 node 1010, the E2 node 101 may transmit the RIC QUERY RESPONSE message including the requested information. In a case that the Near-RT RIC 1020 receives the RIC query response message, the Near-RT RIC 1020 may cease the timer T_{RICquery} and terminate the RIC query procedure.

Although not illustrated in FIG. 11, if the E2 node 1010 fails to audit request validity or fails to retrieve for the information requested for the Near-RT RIC 1020, the E2 node 1010 may transmit a RIC QUERY FAILURE message including a value indicating a cause of failure.

The RIC query request message may be transmitted to request RAN and/or UE-related information from the E2 node 1010. For example, the RIC query request message may have the following format.

**[Table 5]**

| IE/Group Name | Presence | Range | IE type and reference | Seman tics des cription | Criticality | Assigne d Crit icality |
|---|---|---|---|---|---|---|
| Message Type | M | | 9.2.3 | | YES | reject |
| RIC Request ID | M | | 9.2.7 | | YES | reject |
| RAN Function ID | M | | 9.2.8 | | YES | reject |
| RIC Query Header | M | | 9.2.36 | | YES | reject |
| RIC Query Definition | M | | 9.2.37 | | YES | reject |

'M' indicates 'mandatory' and 'O' indicates 'optional'. IE type and reference may be referred to an O-RAN.WG3.E2AP standard. The RIC request ID ('RIC Request ID' IE) and the RAN function ID ('RAN Function ID' IE) may correspond to the RIC subscription information. RIC query header ('RIC Query Header' IE) may be defined by a RAN function specific to a service model. For example, in a case of E2SM-RAN control (RC), the RIC query header may be referred to Table 9 to be described later. A RIC query definition ("RIC Query Definition" IE) may be defined by the RAN function specific to the service model. For example, in a case of E2SM-RAN control (RC), the RIC query definition may be referred to Table 10 to Table 11 to be described later.

The RIC query response message may be transmitted to inform the Near-RT RIC 1020 of the requested RAN and/or UE-related information. For example, the RIC query response message may have the following format.

**[Table 6]**

| IE/Group Name | Presence | Range | IE type and reference | Semantics description | Criticality | Assigne d Criti cality |
|---|---|---|---|---|---|---|
| Message Type | M | | 9.2.3 | | YES | reject |
| RIC Request ID | M | | 9.2.7 | | YES | reject |
| RAN Function ID | M | | 9.2.8 | | YES | reject |
| RIC Query Outcome | M | | 9.2.38 | | YES | reject |

The 'M' indicates 'mandatory' and the 'O' indicates 'optional'. The IE type and reference may be referred to the O-RAN.WG3.E2AP standard. The RIC request ID ('RIC Request ID' IE) and the RAN function ID ('RAN Function ID' IE) may correspond to the RIC subscription information. RIC query outcome ('RIC Query Outcome' IE) may be defined by the RAN function specific to the service model. For example, in a case of the E2SM-RAN control (RC), the RIC query header may be referred to Table 12 to be described later. The RIC query failure message may be transmitted to notify that the request for the RAN and/or UE-related information has failed. For example, the RIC query failure message may have the following format.

**[Table 7]**

| IE/Group Name | Presence | Range | IE type and reference | Seman tics des cription | Criticality | Assigne d Crit icality |
|---|---|---|---|---|---|---|
| Message Type | M | | 9.2.3 | | YES | reject |
| RIC Request ID | M | | 9.2.7 | | YES | reject |
| RAN Function ID | M | | 9.2.8 | | YES | reject |
| Cause | M | | 9.2.1 | | YES | reject |
| Criticality Diagnostics | O | | 9.2.2 | | YES | ignore |

The 'M' indicates 'mandatory' and 'O' indicates 'optional'. The IE type and reference may be referred to the O-RAN.WG3.E2AP standard. The RIC request ID ('RIC Request ID' IE) and the RAN function ID ('RAN Function ID' IE) may correspond to the RIC subscription information. A cause ('Cause' IE) indicates a reason of a specific event in the E2AP protocol, and criticality diagnostics ('Criticality Diagnostics' IE) may include information related to IEs that are not understood or are missing.

A RAN function of RAN control may support the following query service.
1) Retrieval for E2 node-related information between the Near-RT RIC 1020 and the E2 node 1010 on all data required by the Near-RT RIC 1020
2) Retrieval for UE-related information between the Near-RT RIC 1020 and the E2 node 1010 on all data required by the Near-RT RIC 1020
3) Retrieval for subscription-related information between the Near-RT RIC 1020 and the E2 node 1010 on all data required by the Near-RT RIC 1020

E2SM-RC query service requirements may be provided using a set of query styles. All query styles may be implemented using an IE set for the RIC query header, the RIC query definition, and the RIC query outcome. For each query style, a RAN parameter table may be used to specify request information to be requested and responded.

In order to support RIC query services, the following service style lists may be defined.

**[Table 8]**

| RIC Style Type | Style Name | Style Description |
|---|---|---|
| 1 | E2 Node Information Query | Used to request and respond on information related to E2 Node |
| 2 | UE Information Query | Used to request and respond on information related to UE |
| 3 | Audit Query | Used to request and response on information related to subscription |

An audit query may be used to request and respond on information related to a subscription. The audit query may be referred to as a subscription query. A query service type (a RIC service type having a value of '3') may be used to request subscription information from the E2 node 1010 to the Near-RT RIC 1020. The E2 node 1010 may respond to the information requested from the Near-RT RIC 1020 using the service style. Using the service, data related to the following information may be requested and responded.

For example, the query service type may use a RIC query header IE format 1. The format number 10 is exemplary and may be changed.

**[Table 9]**

| IE/Group Name | Presence | Range | IE type and reference | Semantics description |
|---|---|---|---|---|
| RIC Style Type | M | | 9.3.3 | Indicates Style Types in Section 7.8.1 |
| Associated E2 Node Info | O | | 9.3.29 | Used to set optional E2 Node related information.RAN Parameters in Section 8.1.2 shall only be used. |
| Associated UE Info | O | | 9.3.52 | Indicates applicable UE(s) ("Any" UE if not included). |

The 'M' indicates 'mandatory' and the 'O' indicates 'optional'. The IE type and reference may be referred to the O-RAN.WG3.E2SM-RC standard. The RIC style type ('RIC Style Type'IE) may indicate the type of Table 8. For example, the RIC style type may indicate '3'. E2 node information ('Associated E2 Node Info'IE) may include RAN parameters. The associated UE Info'IE may include information on UE. For example, the query service type may use a RIC query definition IE format 2. The format number 2 is exemplary and may be changed.

**[Table 10]**

| **IE/Group Name** | **Presence** | **Range** | **IE type and reference** | **Semantics description** |
|---|---|---|---|---|
| **CHOICE** *Query Definition Format* | M | | | |
| >E2SM-RC Query Definition Format 1 | | | 9.2.1.10.1 | |
| >E2SM-RC Query Definition Format 2 | | | 9.2.1.10.2 | |

The 'M' indicates 'mandatory' and the 'O' indicates 'optional'. The IE type and reference may be referred to the O-RAN.WG3.E2SM-RC standard. The 'E2SM-RC Query Definition Format 2'IE may be referred to in the following table.

**[Table 11]**

| IE/Group Name | Presence | Range | IE type and reference | Semantics description |
|---|---|---|---|---|
| Query Name | M | | OCTET STRING | Indicate the specific name (ex. Subscription audit) |

The 'M' indicates 'mandatory' and the 'O' indicates 'optional'. Query name information ('Query Name' IE) is for defining a service, and may indicate, for example, subscription audit. For example, the query service type may use a RIC query outcome IE format 3. The format number 3 is exemplary and may be changed. Mapping the RAN parameter configured in the RIC query definition IE to a reported IE of the RIC query outcome IE format 1 may be provided in a semantics description of the IE.

**[Table 12]**

| IE/Group Name | Presence | Range | IE type and reference | Semantics description |
|---|---|---|---|---|
| RIC Subscription Details | M | | | |
| >RIC Event Trigger Definition | M | | 9.2.9 | |
| >Sequence of Actions | | 1.. <maxofRICacti onID> | | |
| >>RIC Action ID | M | | 9.2.10 | |
| >>RIC Action Type | M | | 9.2.11 | |
| >>RIC Action Definition | O | | 9.2.12 | |
| >>RIC Subsequent Action | O | | 9.2.13 | |
| >>RIC Action Execution Order | O | | 9.2.35 | Used to define a specific execution order |
| RIC Subscription Start Time | O | | 9.2.34 | |
| RIC Subscription End Time | O | | 9.2.34 | |

The 'M' indicates 'mandatory' and the 'O' indicates 'optional'. The IE type and reference may be referred to the O-RAN.WG3.E2AP standard. The RIC query outcome IE may include subscription details ('RIC Subscription Details' IE). The subscription details may include a RIC event trigger definition ('RIC Event Trigger Definition') and action information on one or more actions. The action information may include a RIC action ID ('RIC Action ID' IE) and a RIC action type ('RIC Action Type' IE) for each action. The RIC action ID may indicate a unique action ID in a given RIC request ID (e.g., a RIC request ID corresponding to the subscription information). The RIC action type may indicate a type (e.g., insert, report, policy, control, and the like) of an action to be executed. Also, Additionally, the action information may include a RIC action definition ('RIC Action Definition' IE) or a subsequent RIC action ('RIC Subsequent Action' IE) for each action. The RIC action definition may provide parameters to be used when a service is executed. The RIC subsequent action may define an action to be performed after a specific action is performed. For example, the RIC subsequent action may include information (e.g., continue and stop) on a action type and information on waiting time. Start time information ('RIC Subscription Start Time' IE) may indicate start time of the RIC subscription as a specific type (e.g., an octet string). End time information ('RIC Subscription End Time' IE) may indicate end time of the RIC subscription as the specific type (e.g., the octet string).

In FIG. 11, examples of the RIC query procedure according to the RAN control among an E2SM-RC, that is, an E2 service model, are described, but embodiments of the present disclosure are not limited thereto. According to an embodiment, the RIC query procedure according to Key performance measurement (KPM) may be configured in the E2 service model. According to an embodiment, the RIC query procedure according to cell configuration control (CCC) may be configured in the E2 service model. A service type of the RIC query procedure may indicate one of various types. For example, a service type of the RIC query procedure in the CCC may be used to request and respond to information on a node-level configuration. As an example, one or more RIC subscription information assigned to a node may be requested. In addition, for example, the service type of the RIC query procedure in the CCC may be used to request and respond to the information on a cell-level configuration. As an example, at least one RIC subscription information providing a service related to a specific cell may be requested. In addition, for example, the service type of the RIC query procedure in the CCC may be used to request and respond to information related to a separate RIC subscription.

For example, for the E2SM-KPM, the following exemplary RIC style type may be indicated.

**[Table 13]**

| RIC Style Type | Style Name | Style Description |
|---|---|---|
| 1 | Audit Query | Used to request and response on information related to subscription |

For example, for the E2SM-CCC, the following exemplary RIC style type may be indicated.

**[Table 14]**

| RIC Style Type | Style Name | Style Description |
|---|---|---|
| 1 | Node-level configuration | Used to request and respond on information related to E2 Node configuration |
| 2 | Cell level configuration | Used to request and respond on information related to cell level configuration |
| 3 | Audit Query | Used to request and response on information related to subscription |

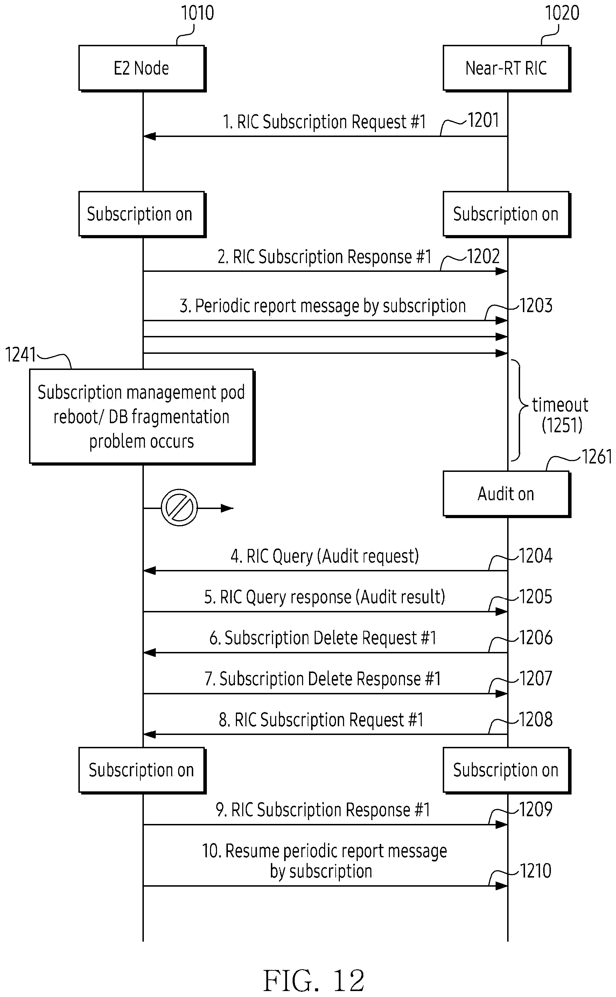

FIG. 12 illustrates an example of error resolution of a RIC subscription procedure through a RIC query procedure according to embodiments.

Referring to FIG. 12, in an operation 1201, a Near-RT RIC 1020 may transmit a RIC subscription request message to an E2 node 1010. One of Table 1 to Table 4 may be referred to as a format structure of the RIC subscription request message. For example, the RIC subscription request message may include information on a RIC subscription #1. The RIC subscription request message may include a RIC request ID and a RAN function ID mapped to the RIC subscription #1. Hereinafter, the RIC subscription request message defined in the Table 1 is illustrated, but a plurality of subscriptions corresponds to a RAN function ID through the Table 2 to Table 4, and error resolution described later may be applied even in a case that the plurality of subscriptions respectively corresponds to a plurality of RIC request IDs.

In an operation 1202, the E2 node 1010 may transmit a RIC subscription response message to the Near-RT RIC 1020. The E2 node 1010 may transmit the RIC subscription response message for notifying that the RIC subscription #1 is successful. For example, the RIC subscription #1 may be related to a periodic report service.

In an operation 1203, the E2 node 1010 may perform a service according to the RIC subscription #1. For example, the E2 node 1010 may perform periodic report based on the RIC subscription #1. The E2 node 1010 may periodically report a RAN-related state to the Near-RT RIC 1020.

While the E2 node 1010 performs the service according to the RIC subscription #1, an event 1241 may occur in the E2 node 1010. For example, a fragmentation problem may occur in a DB of the E2 node 1010. In addition, for example, a reboot of a software block (e.g., subscription management pod) of the E2 node 1010 may occur. The service according to the RIC subscription #1 may be interrupted due to the event 1241. The Near-RT RIC 1020 may receive periodic report messages from the E2 node 1010, and may identify that an event has occurred if a certain period of time has elapses from a last report message (i.e., timeout). The Near-RT RIC 1020 may request to initiate an audit procedure 1261. The Near-RT RIC 1020 may initiate a RIC query procedure to check a subscription state.

In an operation 1204, the Near-RT RIC 1020 may transmit a RIC query request message to the E2 node 1010. The RIC query request message may correspond to an audit request. The RIC query request message may be configured to request information on a RIC subscription of the E2 node 1010. For example, the RIC query request message may include the RIC query request message of the operation 1101 of FIG. 11.

In an operation 1205, the E2 node 1010 may transmit a RIC query response message to the Near-RT RIC 1020. The RIC query response message may correspond to an audit response. The RIC query request message may include the information on the RIC subscription of the E2 node 1010. That is, the RIC query request message may include an audit result. For example, the RIC query request message may include the RIC query response message of the operation 1103 of FIG. 11. The RIC query request message may include subscription details for the RIC subscription #1. For example, for the subscription details, the Table 12 may be referred to.

The Near-RT RIC 1020 may receive the RIC query response message from the E2 node 1010. The Near-RT RIC 1020 may identify that a current state of the E2 node 1010 for the RIC subscription #1 is not normal based on the RIC query response message. The Near-RT RIC 1020 may first remove the RIC subscription #1 registered in the E2 node 1010 to correct a subscription state of the E2 node 1010.

In an operation 1206, the Near-RT RIC 1020 may transmit a RIC SUBSCRIPTION DELETE REQUEST message to the E2 node 1010. The subscription removal request message may include the RIC request ID and the RAN function ID corresponding to the RIC subscription #1.

In an operation 1207, the E2 node 1010 may transmit a RIC SUBSCRIPTION DELETE RESPONSE message to the Near-RT RIC 1020. The subscription removal response message may indicate accepting a deletion request of the Near-RT RIC 1020. The subscription removal response message may include the RIC request ID and the RAN function ID corresponding to the RIC subscription #1. Through the subscription removal response message, the Near-RT RIC 1020 may identify that the abnormal RIC subscription #1 has been successfully removed from the E2 node 1010.

In an operation 1208, the Near-RT RIC 1020 may transmit the RIC subscription request message to the E2 node 1010. One of Table 1 to Table 4 may be referred to as a format structure of the RIC subscription request message. For example, the RIC subscription request message may include information on the RIC subscription #1. The RIC subscription request message may include the RIC request ID and the RAN function ID mapped to the RIC subscription #1. The Near-RT RIC 1020 may transmit the RIC subscription request message including the information on the RIC subscription #1 to the E2 node 1010 to restore the service of the RIC subscription #1 again to which the E2 node 1010 has subscribed. Through this, in both the E2 node 1010 and the Near-RT RIC 1020 the service for the RIC subscription #1 may start (i.e., subscription on).

In an operation 1209, the E2 node 1010 may transmit the RIC subscription response message to the Near-RT RIC 1020. The E2 node 1010 may transmit the RIC subscription response message for notifying that the RIC subscription #1 is successful. For example, RIC subscription #1 may be related to the periodic report service.

In an operation 1210, the E2 node 1010 may resume the service for the RIC subscription #1. For example, the E2 node 1010 may periodically transmit a report message according to the RIC subscription #1 again.

In FIG. 12, an audit procedure, a deletion procedure, and a (re)subscription procedure for one RIC subscription have been described, but embodiments of the present disclosure are not limited thereto. If the one RIC subscription is not mapped to one RIC request ID and one RAN function ID, but a set (e.g., a list) of a plurality of RIC subscriptions corresponds to a RIC request ID and a RAN function ID, the Near-RT RIC 1020 may check information on the plurality of RIC subscriptions through the RIC query procedure.

In the present disclosure, the RIC query procedure initiated by the Near-RT RIC 1020 in order for the Near-RT RIC 1020 to identify a state of the E2 node 1010 is described. However, in order for the E2 node 1010 to identify a subscription state at the Near-RT RIC 1020, transmitting a request message and receiving a response message may also be understood as an embodiment of the present disclosure. Herein, the request message and the response message may follow the message format (e.g., Table 5 to Table 12) described through FIGS. 11 to 12.

The device and method according to embodiments of the present disclosure may reduce a mismatch in subscription information between two nodes by transmitting an RIC query request message to an E2 node (e.g., the E2 node 1010) by a radio access network (RAN) intelligent controller (RIC) (e.g., the Near-RT RIC 1020) in a wireless communication system and may increase resource efficiency by preventing an unnecessary procedure (e.g., a reset procedure). In a case that subscription information registered in a subscription manager of the Near-RT RIC 1020 and subscription information stored in a software block of the E2 node 1010 are different, or a service is disconnected due to an event (e.g., the event 1241) in the E2 node 1010, the Near-RT RIC 1020 may identify a state of the E2 node 1010 through the RIC query procedure and then perform a procedure for deletion of a RIC subscription or a RIC subscription request procedure. According to an embodiment, the procedure for the deletion of the RIC subscription of the present disclosure may include a RIC subscription deletion request procedure (i.e., a RIC subscription deletion request message and a RIC subscription deletion procedure) initiated by the E2 node. According to an embodiment, the procedure for the deletion of the RIC subscription may include the RIC subscription deletion procedure (i.e., the RIC subscription deletion request message and a RIC subscription deletion response message) initiated by the Near-RT RIC. According to an embodiment, the RIC subscription request procedure may be initiated by the Near-RT RIC and may include the RIC subscription request message and the RIC subscription response message.

The effects that may be obtained from the present disclosure are not limited to those described above, and any other effects not mentioned herein will be clearly understood by those having ordinary knowledge in the art to which the present disclosure belongs, from the following description.

In embodiments, a method performed by an E2 node is provided. The method may comprise receiving a radio access network (RAN) intelligent controller (RIC) query request message from a Near-real time (RT) RIC. The method may comprise receiving a RIC query response message from the Near-RT RIC. The RIC query request message may include a RAN function identifier (ID) and a RIC request ID. The RIC query response message may include subscription information corresponding to the RAN function identifier (ID) and the RIC request ID.

According to an embodiment, the RIC query request message may include a RIC query header information element (IE). The RIC query header IE may include information on a RIC style type of a query service. A value of the RIC style type may indicate a style type used to request and respond to information related to subscription.

According to an embodiment, the RIC query request message may be received from the Near-RT RIC after a designated period from transmission of periodic report messages.

According to an embodiment, the RIC query response message may include RIC subscription detail information. The RIC subscription detail information may include, for each RIC action, RIC action ID information, RIC action type information, RIC action definition information, and RIC subsequent action information.

According to an embodiment, the method may comprise receiving a RIC subscription delete request message from the Near-RT RIC. The method may comprise transmitting a RIC subscription delete response message to the Near-RT RIC. The RIC subscription delete request message may include subscription information corresponding to the RAN function ID and the RIC request ID for the subscription information.

In embodiments, a method performed by a Near-real time (RT) radio access network (RAN) intelligent controller (RIC) is provided. The method may comprise transmitting a RIC query request message to an E2 node. The method may comprise receiving a RIC query response message from the E2 node. The RIC query request message may include a RAN function identifier (ID) and a RIC request ID. The RIC query response message may include subscription information corresponding to the RAN function identifier and the RIC request ID.

According to an embodiment, the RIC query request message may include a RIC query header information element (IE). The RIC query header IE may include information on a RIC style type of a query service. A value of the RIC style type may indicate a style type used to request and respond to information related to subscription.

According to an embodiment, the RIC query request message may be transmitted to the E2 node based on expiration of a designated period after receiving periodic report messages.

According to an embodiment, the RIC query response message may include RIC subscription detail information. The RIC subscription detail information may include, for each RIC action, RIC action ID information, RIC action type information, RIC action definition information, and RIC subsequent action information.

According to an embodiment, the method may comprise transmitting a RIC subscription delete request message to the E2 node. The method may comprise receiving a RIC subscription delete response message from the E2 node. The RIC subscription delete request message may include subscription information corresponding to the RAN function ID and the RIC request ID for the subscription information.

In embodiments, an electronic device of an E2 node is provide. The electronic device may comprise at least one transceiver, and at least one processor coupled with the at least one transceiver. The at least one processor may be configured to receive a radio access network (RAN) intelligent controller (RIC) query request message from a Near-real time (RT) RIC. The at least one processor may be configured to receive a RIC query response message from the Near-RT RIC. The RIC query request message may include a RAN function identifier (ID) and a RIC request ID. The RIC query response message may include subscription information corresponding to the RAN function identifier (ID) and the RIC request ID.

According to an embodiment, the RIC query request message may include a RIC query header information element (IE). The RIC query header IE may include information on a RIC style type of a query service. A value of the RIC style type may indicate a style type used to request and respond to information related to subscription.

According to an embodiment, the RIC query request message may be received from the Near-RT RIC after a designated period from transmission of periodic report messages.

According to an embodiment, the RIC query response message may include RIC subscription detail information. The RIC subscription detail information may include, for each RIC action, RIC action ID information, RIC action type information, RIC action definition information, and RIC subsequent action information.

According to an embodiment, the at least one processor may be configured to receive a RIC subscription delete request message from the Near-RT RIC. The at least one processor may be configured to transmit a RIC subscription delete response message to the Near-RT RIC. The RIC subscription delete request message may include subscription information corresponding to the RAN function ID and the RIC request ID for the subscription information.

In embodiments, a device of a Near-real time (RT) radio access network (RAN) intelligent controller (RIC) may comprise at least one transceiver, and at least one processor coupled with the at least one transceiver. The at least one processor may be configured to transmit a RIC query request message to an E2 node. The at least one processor may be configured to receive a RIC query response message from the E2 node. The RIC query request message may include a RAN function identifier (ID) and a RIC request ID. The RIC query response message may include subscription information corresponding to the RAN function identifier and the RIC request ID.

According to an embodiment, the RIC query request message may include a RIC query header information element (IE). The RIC query header IE may include information on a RIC style type of a query service. A value of the RIC style type may indicate a style type used to request and respond to information related to subscription.

According to an embodiment, the RIC query request message may be transmitted to the E2 node based on expiration of a designated period after receiving periodic report messages.

According to an embodiment, the RIC query response message may include RIC subscription detail information. The RIC subscription detail information may include, for each RIC action, RIC action ID information, RIC action type information, RIC action definition information, and RIC subsequent action information.

According to an embodiment, the at least one processor may be configured to transmit a RIC subscription delete request message to the E2 node. The at least one processor may further be configured to receive a RIC subscription delete response message from the E2 node. The RIC subscription delete request message may include subscription information corresponding to the RAN function ID and the RIC request ID for the subscription information.

In embodiments, an electronic device of an E2 node is provide. The electronic device may comprise memory storing instructions, at least one transceiver, and at least one processor. The instructions, when executed by the at least one processor, may cause the electronic device to receive a radio access network (RAN) intelligent controller (RIC) query request message from a Near-real time (RT) RIC, and receive a RIC query response message from the Near-RT RIC. The RIC query request message may include a RAN function identifier (ID) and a RIC request ID. The RIC query response message may include subscription information corresponding to the RAN function identifier (ID) and the RIC request ID.

In embodiments, a device of a Near-real time (RT) radio access network (RAN) intelligent controller (RIC) may comprise memory storing instructions, at least one transceiver, and at least one processor coupled with the at least one transceiver. The instructions, when executed by the at least one processor, may cause the electronic device to transmit a RIC query request message to an E2 node, and receive a RIC query response message from the E2 node. The RIC query request message may include a RAN function identifier (ID) and a RIC request ID. The RIC query response message may include subscription information corresponding to the RAN function identifier (ID) and the RIC request ID.

In embodiments, a non-transitory computer-readable storage medium is provided. The non-transitory computer-readable storage medium may store instructions that cause an E2 node to perform operations including receiving a radio access network (RAN) intelligent controller (RIC) query request message from a Near-real time (RT) RIC, and receiving a RIC query response message from the Near-RT RIC. The RIC query request message may include a RAN function identifier (ID) and a RIC request ID. The RIC query response message may include subscription information corresponding to the RAN function identifier (ID) and the RIC request ID.

In embodiments, a non-transitory computer-readable storage medium is provided. The non-transitory computer-readable storage medium may store instructions that cause an E2 node to perform operations including transmitting a RIC query request message to the E2 node, and receiving a RIC query response message from the E2 node. The RIC query request message may include a RAN function identifier (ID) and a RIC request ID. The RIC query response message may include subscription information corresponding to the RAN function identifier (ID) and the RIC request ID.

Methods according to embodiments described in claims or specifications of the present disclosure may be implemented as a form of hardware, software, or a combination of hardware and software.

In a case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure.

Such a program (software module, software) may be stored in a random access memory, a non-volatile memory including a flash memory, a read only memory (ROM), an electrically erasable programmable read only memory (EEPROM), a magnetic disc storage device, a compact disc-ROM (CD-ROM), an optical storage device (digital versatile discs (DVDs) or other formats), or a magnetic cassette. Alternatively, it may be stored in memory configured with a combination of some or all of them. In addition, a plurality of configuration memories may be included.

Additionally, a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

Meanwhile, specific embodiments have been described in the detailed description of the present disclosure, and of course, various modifications are possible without departing from the scope of the present disclosure.

## Claims

1. A method performed by an E2 node, the method comprising:
receiving a radio access network (RAN) intelligent controller (RIC) query request message from a Near-real time (RT) RIC; and
transmitting a RIC query response message to the Near-RT RIC,
wherein the RIC query request message includes a RAN function identifier (ID) and a RIC request identifier (ID), and
wherein the RIC query response message includes subscription information corresponding to the RAN function ID and the RIC request ID.

2. The method of claim 1,
wherein the RIC query request message includes a RIC query header information element (IE),
wherein the RIC query header IE includes information on a RIC style type of a query service, and
wherein a value of the RIC style type indicates a style type used to request and respond to information related to subscription.

3. The method of claim 1,
wherein the RIC query request message is received from the Near-RT RIC after a designated period from transmission of periodic report messages.

4. The method of claim 1,
wherein the RIC query response message includes RIC subscription detail information, and
wherein the RIC subscription detail information includes, for each RIC action, RIC action ID information, RIC action type information, RIC action definition information, and RIC subsequent action information.

5. The method of claim 1, further comprising:
receiving a RIC subscription delete request message from the Near-RT RIC; and
transmitting a RIC subscription delete response message to the Near-RT RIC,
wherein the RIC subscription delete request message includes subscription information corresponding to the RAN function ID and the RIC request ID for the subscription information.

6. A method performed by a Near-real time (RT) radio access network (RAN) intelligent controller (RIC), the method comprising:
transmitting a RIC query request message to an E2 node; and
receiving a RIC query response message from the E2 node,
wherein the RIC query request message includes a RAN function ID and a RIC request ID, and
wherein the RIC query response message includes subscription information corresponding to the RAN function ID and the RIC request ID.

7. The method of claim 6,
wherein the RIC query request message includes a RIC query header information element (IE),
wherein the RIC query header IE includes information on a RIC style type of a query service, and
wherein a value of the RIC style type indicates a style type used to request and respond to information related to subscription.

8. The method of claim 6,
wherein the RIC query request message is transmitted to the E2 node based on expiration of a designated period after receiving periodic report messages.

9. The method of claim 6,
wherein the RIC query response message includes RIC subscription detail information, and
wherein the RIC subscription detail information includes, for each RIC action, RIC action ID information, RIC action type information, RIC action definition information, and RIC subsequent action information.

10. The method of claim 6, further comprising:
transmitting a RIC subscription delete request message to the E2 node; and
receiving a RIC subscription delete response message from the E2 node,
wherein the RIC subscription delete request message includes subscription information corresponding to the RAN function ID and the RIC request ID for the subscription information.

11. An electronic device of an E2 node, comprising:
at least one transceiver; and
at least one processor coupled with the at least one transceiver,
wherein the at least one processor is configured to:
receive, from a Near-real time (RT) radio access network intelligent controller (RIC), a RIC query request message, and
transmit, to the Near-RT RIC, a RIC query response message,
wherein the RIC query request message includes a RAN function ID and a RIC request ID, and
wherein the RIC query response message includes subscription information corresponding to the RAN function ID and the RIC request ID.

12. The electronic device of claim 11,
wherein the RIC query request message includes a RIC query header information element (IE),
wherein the RIC query header IE includes information on a RIC style type of a query service, and
wherein a value of the RIC style type indicates a style type used to request and respond to information related to subscription.

13. The electronic device of claim 11,
wherein the RIC query request message is received from the Near-RT RIC after a designated period from transmission of periodic report messages.

14. The electronic device of claim 11,
wherein the RIC query response message includes RIC subscription detail information, and
wherein the RIC subscription detail information includes, for each RIC action, RIC action ID information, RIC action type information, RIC action definition information, and RIC subsequent action information.

15. The electronic device of claim 11,
wherein the at least one processor is further configured to:
receive a RIC subscription delete request message from the Near-RT RIC; and
transmit a RIC subscription delete response message to the Near-RT RIC,
wherein the RIC subscription delete request message includes subscription information corresponding to the RAN function ID and the RIC request ID for the subscription information.
